(19) Europäisches Patentamt
European Patent Office
Office européen des brevets

(11) **EP 2 854 198 A1**

(12) **EUROPEAN PATENT APPLICATION**
published in accordance with Art. 153(4) EPC

(43) Date of publication:
**01.04.2015 Bulletin 2015/14**

(51) Int Cl.:
**H01M 2/16** (2006.01)   **C08J 9/26** (2006.01)

(21) Application number: **13794631.5**

(22) Date of filing: **20.05.2013**

(86) International application number:
**PCT/JP2013/003208**

(87) International publication number:
**WO 2013/175762 (28.11.2013 Gazette 2013/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.05.2012   JP 2012116997**

(71) Applicant: **Nitto Denko Corporation**
**Ibaraki-shi, Osaka 567-8680 (JP)**

(72) Inventors:
• **YAMADA, Yosuke**
**Ibaraki-shi**
**Osaka 567-8680 (JP)**

• **SAKAMOTO, Michie**
**Ibaraki-shi**
**Osaka 567-8680 (JP)**
• **NOUMI, Shunsuke**
**Ibaraki-shi**
**Osaka 567-8680 (JP)**

(74) Representative: **Intès, Didier Gérard André et al**
**Cabinet Beau de Loménie**
**158, rue de l'Université**
**75340 Paris Cedex 07 (FR)**

(54) **METHOD FOR PRODUCING A SEPARATOR FOR A NONAQUEOUS ELECTROLYTE POWER STORAGE DEVICE AND METHOD FOR PRODUCING EPOXY RESIN POROUS MEMBRANE**

(57)     Provided is a method for producing a separator for nonaqueous electrolyte electricity storage devices that includes a porous epoxy resin membrane, the method including: a step (i) of preparing an epoxy resin composition containing an epoxy resin, a curing agent, and a porogen; a step (ii) of cutting a cured product of the epoxy resin composition into a sheet shape or curing a sheet-shaped formed body of the epoxy resin composition so as to obtain an epoxy resin sheet; a step (iii) of removing the porogen from the epoxy resin sheet using a halogen-free solvent so as to form a porous epoxy resin membrane; a step (iv) of irradiating the porous epoxy resin membrane with infrared ray so as to measure infrared absorption characteristics of the porous epoxy resin membrane; and a step (v) of calculating a membrane thickness and/or an average pore diameter of the porous epoxy resin membrane based on the infrared absorption characteristics. This production method can avoid the use of a solvent that places a large load on the environment, and is adapted for control of parameters such as the average pore diameter and the membrane thickness.

FIG.4

**Description**

TECHNICAL FIELD

The present invention relates to a method for producing a separator for nonaqueous electrolyte electricity storage devices and a method for producing a porous epoxy resin membrane.

BACKGROUND ART

The demand for nonaqueous electrolyte electricity storage devices, as typified by lithium-ion secondary batteries, lithium-ion capacitors etc., is increasing year by year against a background of various problems such as global environment conservation and depletion of fossil fuel. Porous polyolefin membranes are conventionally used as separators for nonaqueous electrolyte electricity storage devices. A porous polyolefin membrane can be produced by the method described below.

First, a solvent and a polyolefin resin are mixed and heated to prepare a polyolefin solution. The polyolefin solution is formed into a sheet shape by means of a metal mold such as a T-die, and the resulting product is discharged and cooled to obtain a sheet-shaped formed body. The sheet-shaped formed body is stretched, and the solvent is removed from the formed body. Thus, a porous polyolefin membrane is obtained. In the step of removing the solvent from the formed body, an organic solvent is used (see Patent Literature 1).

CITATION LIST

Patent Literature

     Patent Literature 1: JP 2001-192487 A
     Patent Literature 2: JP 2000-30683 A

SUMMARY OF INVENTION

Technical Problem

In the above production method, a halogenated organic compound such as dichloromethane is often used as the organic solvent. The use of a halogenated organic compound places a very large load on the environment, and therefore has become a problem.

By contrast, with a method described in Patent Literature 2 (a so-called dry method), a porous polyolefin membrane can be produced without use of a solvent that places a large load on the environment. However, this method has a problem in that control of the pore diameter of the porous membrane is difficult. In addition, there is also a problem in that when a porous membrane produced by this method is used as a separator for an electricity storage device, imbalance of ion permeation tends to occur inside the electricity storage device.

The present invention aims to provide a method for producing a separator for nonaqueous electrolyte electricity storage devices, the method being capable of avoiding the use of a solvent that places a large load on the environment and being adapted for control of parameters such as the average pore diameter and the membrane thickness.

Solution to Problem

The present invention provides a method for producing a separator for nonaqueous electrolyte electricity storage devices that includes a porous epoxy resin membrane, the method including:

     a step (i) of preparing an epoxy resin composition containing an epoxy resin, a curing agent, and a porogen;

     a step (ii) of cutting a cured product of the epoxy resin composition into a sheet shape or curing a sheet-shaped formed body of the epoxy resin composition so as to obtain an epoxy resin sheet;

     a step (iii) of removing the porogen from the epoxy resin sheet using a halogen-free solvent so as to form a porous epoxy resin membrane;

     a step (iv) of irradiating the porous epoxy resin membrane with infrared ray so as to measure infrared absorption characteristics of the porous epoxy resin membrane; and

     a step (v) of calculating a membrane thickness and/or an average pore diameter of the porous epoxy resin membrane based on the infrared absorption characteristics.

Advantageous Effects of Invention

According to the present invention, a porogen is removed from an epoxy resin sheet using a halogen-free solvent, and thus a porous epoxy resin membrane is obtained. Therefore, the use of a solvent that places a large load on the environment can be avoided. In addition, according to the present invention, parameters such as the average pore diameter and the membrane thickness can easily be controlled.

BRIEF DESCRIPTION OF DRAWINGS

     FIG. 1 is a schematic cross-sectional view of a nonaqueous electrolyte electricity storage device according to an embodiment of the present invention.
     FIG. 2 is a schematic diagram showing a cutting step.
     FIG. 3 is a schematic diagram of an embodiment of a production system for carrying out a production method of the present invention.
     FIG. 4 is a schematic diagram of another embodiment of a production system for carrying out a production method of the present invention.

FIG. 5 is an infrared absorption spectrum (IR chart) obtained in an example of the present invention.

FIG. 6 is a calibration curve created in an example of the present invention for determination of an average pore diameter.

## DESCRIPTION OF EMBODIMENTS

Hereinafter, an embodiment of the present invention will be described with reference to the accompanying drawings.

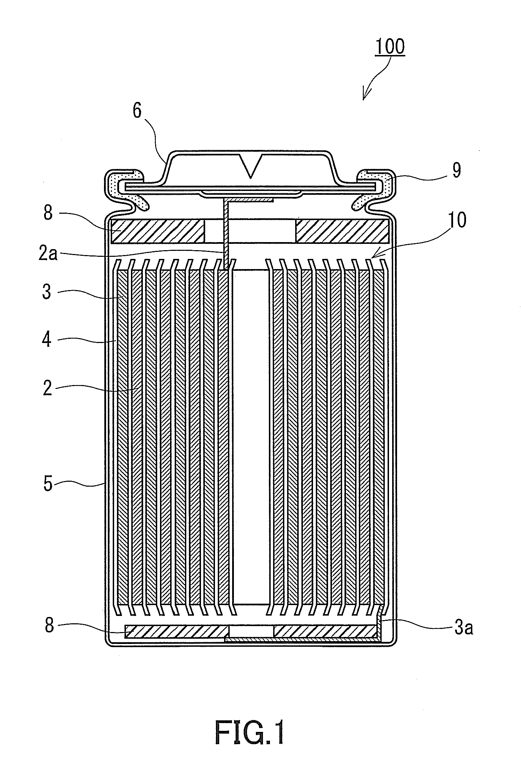

As illustrated in FIG. 1, a separator 4 for nonaqueous electrolyte electricity storage devices is disposed between a cathode 2 and an anode 3 in a nonaqueous electrolyte electricity storage device 100. The separator 4 serves to separate the cathode 2 and the anode 3 from each other and also to ensure ion conductivity between the cathode 2 and the anode 3 by retaining an electrolyte solution (nonaqueous electrolyte solution). In the present embodiment, for example, a porous epoxy resin membrane produced by any of the methods (a), (b), and (c) described below is used as the separator for nonaqueous electrolyte electricity storage devices. The methods (a) and (b) are similar in that an epoxy resin composition is formed into a sheet shape by being applied onto a substrate, and then a curing step is carried out. The method (c) is characterized in that a block-shaped cured product of an epoxy resin is made, and the cured product is formed into a sheet shape.

### Method (a)

An epoxy resin composition containing an epoxy resin, a curing agent, and a porogen is applied onto a substrate so that a sheet-shaped formed body of the epoxy resin composition is obtained. Thereafter, the sheet-shaped formed body of the epoxy resin composition is heated to cause the epoxy resin to be three-dimensionally cross-linked. At this time, a bicontinuous structure is formed as a result of phase separation between the cross-linked epoxy resin and the porogen. Thereafter, the obtained epoxy resin sheet is washed to remove the porogen, and is then dried to obtain a porous epoxy resin membrane having a three-dimensional network structure and pores communicating with each other. The type of the substrate is not particularly limited. A plastic substrate, a glass substrate, a metal plate, or the like, can be used as the substrate.

### Method (b)

An epoxy resin composition containing an epoxy resin, a curing agent, and a porogen is applied onto a substrate. Thereafter, another substrate is placed onto the applied epoxy resin composition to fabricate a sandwich structure. Spacers (e.g., double-faced tapes) may be provided at four corners of the substrates in order to keep a certain space between the substrates. Next, the sandwich structure is heated to cause the epoxy resin to be three-dimensionally cross-linked. At this time, a bicontinuous structure is formed as a result of phase separation between the cross-linked epoxy resin and the porogen. Thereafter, the obtained epoxy resin sheet is taken out, washed to remove the porogen, and then dried to obtain a porous epoxy resin membrane having a three-dimensional network structure and pores communicating with each other. The type of the substrates is not particularly limited. Plastic substrates, glass substrates, metal plates, or the like, can be used as the substrates. In particular, glass substrates can be suitably used.

### Method (c)

An epoxy resin composition containing an epoxy resin, a curing agent, and a porogen is filled into a metal mold having a predetermined shape. Thereafter, the epoxy resin is caused to be three-dimensionally cross-linked to fabricate a hollow-cylindrical or solid-cylindrical cured product of the epoxy resin composition. At this time, a bicontinuous structure is formed as a result of phase separation between the cross-linked epoxy resin and the porogen. Thereafter, the surface part of the cured product of the epoxy resin composition is cut at a predetermined thickness while rotating the cured product about the hollow cylinder axis or solid cylinder axis, to fabricate a long epoxy resin sheet. Then, the epoxy resin sheet is washed to remove the porogen contained in the sheet, and is then dried to obtain a porous epoxy resin membrane having a three-dimensional network structure and pores communicating with each other.

Hereinafter, the method (c) will be described in detail. The step of preparing an epoxy resin composition, the step of curing an epoxy resin, the step of removing a porogen, and the like, are common to all of the methods. In addition, usable materials are also common to all of the methods.

With the method (c), a porous epoxy resin membrane can be produced through the following main steps.

- Step (i): Preparing an epoxy resin composition.
- Step (ii): Forming a cured product of the epoxy resin composition into a sheet shape.
- Step (iii): Removing a porogen from the epoxy resin sheet.

First, an epoxy resin composition containing an epoxy resin, a curing agent, and a porogen (pore-forming agent) is prepared. Specifically, a homogeneous solution is prepared by dissolving an epoxy resin and a curing agent in a porogen.

As the epoxy resin, either an aromatic epoxy resin or a non-aromatic epoxy resin can be used. Examples of the aromatic epoxy resin include polyphenyl-based epoxy resins, epoxy resins containing a fluorene ring, epoxy resins containing triglycidyl isocyanurate, and epoxy resins containing a heteroaromatic ring (e.g., a triazine ring). Examples of the polyphenyl-based epoxy resins include bisphenol A-type epoxy resins, brominated bisphenol A-type epoxy resins, bisphenol F-type epoxy resins, bisphenol AD-type epoxy resins, stilbene-type epoxy resins, biphenyl-type epoxy resins, bisphenol A novolac-type epoxy resins, cresol novolac-type epoxy resins, diaminodiphenylmethane-type epoxy resins, tetrakis(hydroxyphenyl)ethane-based epoxy resins. Examples of the non-aromatic epoxy resins include aliphatic glycidyl ether-type epoxy resins, aliphatic glycidyl ester-type epoxy resins, cycloaliphatic glycidyl ether-type epoxy resins, cycloaliphatic glycidylamine-type epoxy resins, and cycloaliphatic glycidyl ester-type epoxy resins. These may be used alone, or two or more thereof may be used in combination.

Among these, at least one that is selected from the group consisting of bisphenol A-type epoxy resins, brominated bisphenol A-type epoxy resins, bisphenol F-type epoxy resins, bisphenol AD-type epoxy resins, epoxy resins containing a fluorene ring, epoxy resins containing triglycidyl isocyanurate, cycloaliphatic glycidyl ether-type epoxy resins, cycloaliphatic glycidylamine-type epoxy resins, and cycloaliphatic glycidyl ester-type epoxy resins and that has an epoxy equivalent of 6000 or less and a melting point of 170°C or lower, can be suitably used. The use of these epoxy resins allows a uniform three-dimensional network structure and uniform pores to be formed, and also allows excellent chemical resistance and high strength to be imparted to the porous epoxy resin membrane.

As the curing agent, either an aromatic curing agent or a non-aromatic curing agent can be used. Examples of the aromatic curing agent include aromatic amines (e.g., meta-phenylenediamine, diaminodiphenylmethane, diaminodiphenyl sulfone, benzyldimethylamine, and dimethylaminomethylbenzene), aromatic acid anhydrides (e.g., phthalic anhydride, trimellitic anhydride, and pyromellitic anhydride), phenolic resins, phenolic novolac resins, and amines containing a heteroaromatic ring (e.g., amines containing a triazine ring). Examples of the non-aromatic curing agent include aliphatic amines (e.g., ethylenediamine, diethylenetriamine, triethylenetetramine, tetraethylenepentamine, iminobispropylamine, bis(hexamethylene)triamine, 1,3,6-trisaminomethylhexane, polymethylenediamine, trimethylhexamethylenediamine, and polyetherdiamine), cycloaliphatic amines (e.g., isophoronediamine, menthanediamine, N-aminoethylpiperazine, an adduct of 3,9-bis(3-aminopropyl)2,4,8,10-tetraoxaspiro(5, 5)undecane, bis(4-amino-3-methylcyclohexyl)methane, bis(4-aminocyclohexyl)methane, and modified products thereof), and aliphatic polyamidoamines containing polyamines and dimer acids. These may be used alone, or two or more thereof may be used in combination.

Among these, a curing agent having two or more primary amines per molecule can be suitably used.

Specifically, at least one selected from the group consisting of meta-phenylenediamine, diaminodiphenylmethane, diaminodiphenyl sulfone, polymethylenediamine, bis(4-amino-3-methylcyclohexyl)methane, and bis(4-aminocyclohexyl)methane, can be suitably used. The use of these curing agents allows a uniform three-dimensional network structure and uniform pores to be formed, and also allows high strength and appropriate elasticity to be imparted to the porous epoxy resin membrane.

A preferred combination of an epoxy resin and a curing agent is a combination of an aromatic epoxy resin and an aliphatic amine curing agent, a combination of an aromatic epoxy resin and a cycloaliphatic amine curing agent, or a combination of a cycloaliphatic epoxy resin and an aromatic amine curing agent. These combinations allow excellent heat resistance to be imparted to the porous epoxy resin membrane.

The porogen can be a solvent capable of dissolving the epoxy resin and the curing agent. The porogen is used also as a solvent that can cause reaction-induced phase separation after the epoxy resin and the curing agent are polymerized. Specific examples of substances that can be used as the porogen include cellosolves such as methyl cellosolve and ethyl cellosolve, esters such as ethylene glycol monomethyl ether acetate and propylene glycol monomethyl ether acetate, glycols such as polyethylene glycol and polypropylene glycol, and ethers such as polyoxyethylene monomethyl ether and polyoxyethylene dimethyl ether. These may be used alone, or two or more thereof may be used in combination.

Among these, at least one selected from the group consisting of methyl cellosolve, ethyl cellosolve, polyethylene glycol having a molecular weight of 600 or less, ethylene glycol monomethyl ether acetate, propylene glycol monomethyl ether acetate, polypropylene glycol, polyoxyethylene monomethyl ether, and polyoxyethylene dimethyl ether, can be suitably used. In particular, at least one selected from the group consisting of polyethylene glycol having an average molecular weight of 200 or less, polypropylene glycol having a molecular weight of 500 or less, polyoxyethylene monomethyl ether, and propylene glycol monomethyl ether acetate, can be suitably used. The use of these porogens allows a uniform three-dimensional network structure and uniform pores to be formed. These may be used alone, or two or more thereof may be used in combination.

In addition, a solvent in which a reaction product of the epoxy resin and the curing agent is soluble can be used as the porogen even if the epoxy resin or the curing agent is individually insoluble or poorly-soluble in the solvent at ordinary temperature. Examples of such a porogen include a brominated bisphenol A-type epoxy resin ("Epicoat 5058" manufactured by Japan Epoxy Resin Co., Ltd).

The porosity, the average pore diameter, and the pore diameter distribution of the porous epoxy resin membrane vary depending on the types of the materials, the blending ratio of the materials, and reaction conditions (e.g., heating temperature and heating time at the time of reaction-induced phase separation). Therefore, in order to obtain the intended porosity, average pore diameter, and pore diameter distribution, optimal conditions are preferably selected. In addition, by controlling the molecular weight of the cross-linked epoxy resin, the molecular weight distribution, the viscosity of the solution, the cross-linking reaction rate etc. at the time of phase separation, a bicontinuous structure of the cross-linked epoxy resin and the porogen can be fixed in a particular state, and thus a stable porous structure can be obtained.

For example, the blending ratio of the curing agent to the epoxy resin is such that the curing agent equivalent is 0.6 to 1.5 per one epoxy equivalent. An appropriate curing agent equivalent contributes to improvement in the characteristics of the porous epoxy resin membrane, such as the heat resistance, the chemical durability, and the mechanical properties.

In order to obtain an intended porous structure, a curing accelerator may be added to the solution in addition to the curing agent. Examples of the curing accelerator include tertiary amines such as triethylamine and tributylamine, and imidazoles such as 2-phenol-4-methylimidazole, 2-ethyl-4-methylimidazole, and 2-phenol-4,5-dihydroxyimidazole.

For example, 40% by weight to 80% by weight of the porogen can be used relative to the total weight of the epoxy resin, the curing agent, and the porogen. The use of an appropriate amount of the porogen allows formation of a porous epoxy resin membrane having a desired porosity, average pore diameter, and air permeability.

One example of the method for adjusting the average pore diameter of the porous epoxy resin membrane within a desired range is to mix and use two or more types of epoxy resins having different epoxy equivalents. At this time, the difference between the epoxy equivalents is preferably 100 or more. In some cases, an epoxy resin that is liquid at ordinary temperature and an epoxy resin that is solid at ordinary temperature are mixed and used.

Next, a cured product of the epoxy resin composition is fabricated from the solution containing the epoxy resin, the curing agent, and the porogen. Specifically, the solution is filled into a metal mold, and heated as necessary. A cured product having a predetermined shape can be obtained by causing the epoxy resin to be three-dimensionally cross-linked. At this time, a bicontinuous structure is formed as a result of phase separation between the cross-linked epoxy resin and the porogen.

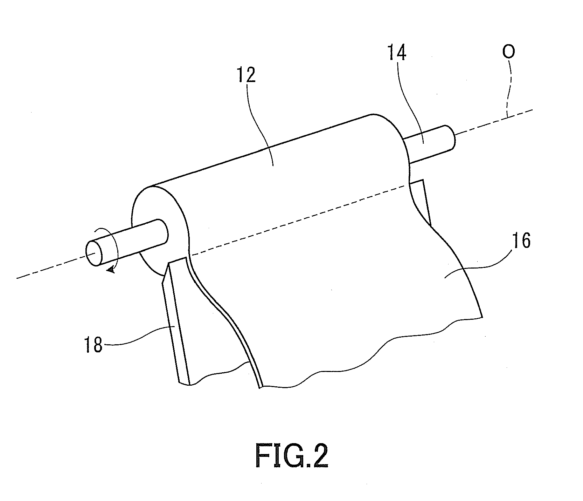

The shape of the cured product is not particularly limited. If a solid-cylindrical or hollow-cylindrical metal mold is used, a cured product having a hollow-cylindrical or solid-cylindrical shape can be obtained. When the cured product has a hollow-cylindrical or solid-cylindrical shape, the cutting step described later (see FIG. 2) is easy to carry out.

The temperature and time required for curing the epoxy resin composition vary depending on the types of the epoxy resin and the curing agent, and thus are not particularly limited. In order to obtain a porous epoxy resin membrane having pores that are distributed uniformly and have uniform pore diameters, the curing process can be carried out at room temperature. In the case of curing at room temperature, the temperature is about 20°C to 40°C, and the time is about 3 hours to 100 hours and preferably about 20 hours to 50 hours. In the case of curing by heating, the temperature is about 40°C to 120°C and preferably about 60°C to 100°C, and the time is about 10 minutes to 300 minutes and preferably about 30 minutes to 180 minutes. After the curing process, postcuring (post-treatment) may be performed in order to increase the degree of cross-linking of the cross-linked epoxy resin. The conditions of the postcuring are not particularly limited. The temperature is a room temperature or about 50°C to 160°C, and the time is about 2 hours to 48 hours.

The dimensions of the cured product are not particularly limited. In the case where the cured product has a hollow-cylindrical or solid-cylindrical shape, the diameter of the cured product is, for example, 30 cm or more, and preferably 40 cm to 150 cm, from the standpoint of the production efficiency of the porous epoxy resin membrane. The length (in the axial direction) of the cured product can also be set as appropriate in consideration of the dimensions of the porous epoxy resin membrane to be obtained. The length of the cured product is, for example, 20 cm to 200 cm. From the standpoint of handleability, the length is preferably 20 cm to 150 cm, and more preferably 20 cm to 120 cm.

Next, the cured product is formed into a sheet shape. The cured product having a hollow-cylindrical or solid-cylindrical shape can be formed into a sheet shape by the following method. Specifically, as shown in FIG. 2, a cured product 12 is mounted on a shaft 14. The surface part of the cured product 12 is cut (sliced) at a predetermined thickness using a cutting blade (slicer) 18 so that an epoxy resin sheet 16 having a long strip shape is obtained. More specifically, the surface part of the cured product 12 is skived while rotating the cured product 12 about a hollow cylinder axis (or solid cylinder axis) O of the cured product 12 relative to the cutting blade 18. The position of the cutting blade 18 relative to the hollow cylinder axis (or solid cylinder axis) O of the cured product 12 is controlled so that the cutting blade 18 moves closer to the hollow cylinder axis O by a predetermined distance during one rotation of the cured product 12 relative to the cutting blade 18. This predetermined distance corresponds to the cutting thickness. With this method, the epoxy resin sheet 16 having a predetermined thickness can be fabricated efficiently.

The line speed during skiving of the cured product 12 is in the range of, for example, 2 m/min to 50 m/min. The thickness of the epoxy resin sheet 16 is determined depending on a target membrane thickness (e.g., 5 $\mu$m to 50 $\mu$m, or 10 $\mu$m to 50 $\mu$m) of the porous epoxy resin membrane. Removal of the porogen and the subsequent drying slightly reduce the thickness. Therefore, the epoxy resin sheet 16 generally has a thickness slightly greater than the target membrane thickness of the porous epoxy resin membrane. The length of the epoxy resin sheet 16 is not particularly limited. From the standpoint of the production efficiency of the epoxy resin sheet 16, the length is, for example, 100 m or more, and preferably 1000 m or more.

Finally, the porogen is extracted and removed from the epoxy resin sheet 16. Specifically, the porogen can be removed from the epoxy resin sheet 16 by immersing the epoxy resin sheet 16 in a halogen-free solvent. Thus, the porous epoxy resin membrane that can be used as the separator 4 is obtained.

As the halogen-free solvent for removing the porogen from the epoxy resin sheet 16, at least one selected from the group consisting of water, DMF (N,N-dimethylformamide), DMSO (dimethylsulfoxide), and THF (tetrahydrofuran), can be used depending on the type of the porogen. In addition, a supercritical fluid of water, carbon dioxide, or the like, can also be used as the solvent for removing the porogen. In order to actively remove the porogen from the epoxy resin sheet 16, ultrasonic washing may be performed, or the solvent may be heated before use.

The type of a washing device for removing the porogen is not particularly limited either, and a commonly-known washing device can be used. In the case where the porogen is removed by immersing the epoxy resin sheet 16 in a solvent, a multi-stage washer having a plurality of washing tanks can be suitably used. The number of stages of washing is more preferably three or more. In addition, washing that substantially corresponds to multi-stage washing may be performed by means of counterffow. Furthermore, the temperature of the solvent or the type of the solvent may be changed for each stage of washing.

After removal of the porogen, the porous epoxy resin membrane is subjected to a drying process. The conditions of drying are not particularly limited. The temperature is generally about 40°C to 120°C, and preferably about 50°C to 80°C. The drying time is about 3 minutes to 3 hours. For the drying process, a dryer can be used that employs a commonly-known sheet drying method, such as a tenter method, a floating method, a roll method, or a belt method. A plurality of drying methods may be combined.

With the method of the present embodiment, the porous epoxy resin membrane that is usable as the separator 4 can be produced very easily. Since some step such as a stretching step required for production of conventional porous polyolefin membranes can be omitted, the porous epoxy resin membrane can be produced with high productivity In addition, since a conventional porous polyolefin membrane is subjected to high temperature and high shear force during the production process, an additive such as an antioxidant needs to be used. By contrast, with the method of the present embodiment, the porous epoxy resin membrane can be produced without being subjected to high temperature and high shear force. Therefore, the need for use of an additive such as an antioxidant as contained in a conventional porous polyolefin membrane can be eliminated. Furthermore, since inexpensive materials can be used as the epoxy resin, the curing agent, and the porogen, the production cost of the separator 4 can be reduced.

In the present embodiment, the porous epoxy resin membrane obtained as described above is irradiated with infrared ray to measure its infrared absorption characteristics. The infrared absorption characteristics measured can be used to calculate the membrane thickness and/or the average pore diameter of the porous epoxy resin membrane. That is, the method of the present embodiment further includes the following steps (iv) to (v).

- Step (iv): Measuring the infrared absorption characteristics of the porous epoxy resin membrane.
- Step (v): Calculating the membrane thickness and/or the average pore diameter of the porous epoxy resin membrane based on the infrared absorption characteristics.

The infrared absorption characteristics in the present embodiment are measured in the form of an infrared absorption spectrum formed by detecting infrared ray transmitted through the porous epoxy resin membrane in the thickness direction of the membrane, that is, a spectrum obtained by infrared spectroscopy (an IR chart). The infrared absorption spectrum includes an absorption peak whose peak intensity varies depending on the amount of the resin contained in the porous epoxy resin membrane. In the present description, the "peak intensity" is used as a term that means an absorbance at the top of the peak. As is conventional, the "absorbance at an absorption peak" is determined by an absorbance at the top of the absorption peak. Absorbances in a specific wavenumber range (hereinafter, the terms "wavenumber" and "wavenumber range" are used instead of "wavelength" and "wavelength range" to indicate wavenumbers in place of wavelengths) in the infrared absorption spectrum reflect the degree of light scattering in the porous epoxy resin membrane. Therefore, the membrane thickness and/or the average pore diameter of the porous epoxy resin membrane can be calculated based on these absorbances. The infrared absorption characteristics are not limited to an infrared absorption spectrum. For example, an absorbance at a specific wavenumber that reflects the amount of the resin and an absorbance at a specific wavenumber that reflects the degree of light scattering may only be measured as the infrared absorption characteristics.

The evaluation of the membrane thickness and/or the average pore diameter based on the infrared absorption characteristics can be applied to the porous epoxy resin membrane that is being transported on the production line. In other words, the evaluation based on the infrared absorption characteristics allows online measurement of the membrane thickness and/or the average pore diameter. Therefore, the evaluation based on the infrared absorption characteristics is more suitable for use in a mass production process of porous epoxy resin membranes than offline evaluation as typified by average pore diameter measurement using mercury intrusion method. In addition, when the feedback control described later is performed in conjunction with the online evaluation to stabilize the membrane thickness based on the evaluation result, the mass production line can be operated stably over a long period of time, and the yield of porous epoxy resin membranes is increased.

The membrane thickness and/or the average pore diameter of the porous epoxy resin membrane can be calculated based on a calibration curve. The calibration curve used for calculation of the membrane thickness can be created, for example, based on a membrane thickness measured using a contact digital measuring instrument (for example, "Litematic VL-50-B" manufactured by Mitutoyo Corporation) and on the peak intensity of the absorption peak used for the calculation. The calibration curve used for calculation of the average pore diameter can be created, for example, based on an average pore diameter measured by mercury intrusion method and on the ratio between the peak intensities of two absorption peaks used for the calculation. It is convenient to preliminarily store the calibration curves in a storage means provided in the measurement device so that the membrane thickness and the like can be displayed immediately based on the measurement results of the peak intensity and the like.

For the calculation of the membrane thickness, it is desirable to use an absorbance (referred to as an "absorbance A" hereinafter) at the absorption peak whose peak intensity shows a strong correlation with the amount of the resin present in the membrane. Although the absorption peak selected to specify the absorbance A differs depending on, for example, the types of the epoxy resin and the curing agent, an absorption peak present in the wavenumber range of 500 cm$^{-1}$ to 2000 cm$^{-1}$ is suitable. In addition, an absorption peak at which the absorbance is 2 or less, for example 0.05 to 2, and particularly 0.1 to 1.5, is suitable. In addition, an absorption peak that does not significantly overlap with an adjacent peak is suitable. In the case of the porous epoxy resin membrane that is formed by an epoxy resin having an aromatic ring, an absorption peak present at 1607 cm$^{-1}$ is preferably selected as the absorption peak for specifying the absorbance A. This absorption peak attributed to absorption by the aromatic ring is so low that the absorbance is not more than 1, and this peak is suitable for estimating the amount of the resin present in the membrane. In the case of an epoxy resin containing no aromatic ring, an absorbance at another absorption peak present in the wavenumber range of 500 cm$^{-1}$ to 2000 cm$^{-1}$ may be selected. Here, an absorption peak present at a given wavenumber (e.g., 1607 cm$^{-1}$) encompasses not only an absorption peak whose top is present at the wavenumber but also a peak in which any point between its base and top is present at the wavenumber. In addition, an absorption peak present in a given wavenumber range (e.g., 500 cm$^{-1}$ to 2000 cm$^{-1}$) means an absorption peak whose top is present in the wavenumber range.

When porous membranes contain equal amounts of a resin present in the thickness direction of the membranes but have different porosities, the thicknesses of the membranes are different. Therefore, the membrane thickness calculated from the absorbance A is desirably corrected for the porosity. When rigorous measurement is required, a plurality of calibration curves corresponding to a range of porosities may be prepared. However, when the variation in porosity is as small as expected for a usual mass production process, it is not difficult to obtain a reliable measured value of the membrane thickness without correction for the porosity.

For the calculation of the average pore diameter, an absorbance (referred to as an "absorbance B" hereinafter) that shows a strong correlation with the degree of light scattering caused by the pores of the membrane is desirably selected together with the absorbance A. An absorbance at a specific wavenumber selected from the wavenumber range of 3800 cm$^{-1}$ to 4200 cm$^{-1}$ is suitable as the absorbance B. In this wavenumber range, absorption by functional groups does not substantially occur and, therefore, a clear absorption peak is not present. The absorbance measured in this wavenumber range is due to light scattering in the porous epoxy resin membrane. Therefore, unlike the case of the absorbance A, it is appropriate to specify the absorbance B not as the peak intensity of an absorption peak but merely as an absorbance at a given wavenumber. A preferred example of the absorbance B is an absorbance measured at 4000 cm$^{-1}$. For the calculation of the average pore diameter, for example, it is preferable to use, as an index, the ratio of the absorbance B to the absorbance A, specifically the ratio of the absorbance B at a specific wavenumber selected from the wavenumber range of 3800 cm$^{-1}$ to 4200 cm$^{-1}$ to the absorbance A at an absorption peak present in the wavenumber range of 500 cm$^{-1}$ to 2000 cm$^{-1}$, or preferably the ratio of the absorbance B at 4000 cm$^{-1}$ to the absorbance A at an absorption peak present at 1607 cm$^{-1}$, that is, the ratio represented as (Absorbance B at 4000 cm$^{-1}$ / Absorbance A at absorption peak present at 1607 cm$^{-1}$).

The method of the present embodiment preferably further includes the following step (vi) subsequent to the steps (iv) to (v).

- Step (vi): Adjusting the membrane thickness and/or the average pore diameter of the porous epoxy resin membrane with reference to a target value.

That is, feedback control is carried out in which a target membrane thickness and/or a target average pore diameter is set as the target value.

The step of adjusting the membrane thickness is carried out, for example, as the step (vi-a) described below after the step (v) of calculating the membrane thickness of the porous epoxy resin membrane based on the infrared absorption characteristics is carried out.

• Step (vi-a)

The step (vi-a) is a step of changing a factor that determines a thickness at which the cured product of the epoxy resin composition is cut or a factor that determines a thickness of the sheet-shaped formed body of the epoxy resin composition, in such a manner that a thickness of the epoxy resin sheet to be obtained in the step (ii) is reduced when the membrane thickness calculated in the step (v) is greater than a target membrane thickness of the porous epoxy resin membrane, and that the thickness of the epoxy resin sheet to be obtained in the step (ii) is increased when the membrane thickness calculated in the step (v) is smaller than the target membrane thickness of the porous epoxy resin membrane.

For the step (vi-a), examples of the factor that determines the thickness at which the cured product of the epoxy resin composition is cut include the control of the positional relationship between the cured product and the cutting blade during the cutting of the cured product. That is, in the case where the step (ii) includes cutting the surface part of a hollow-cylindrical or solid cylindrical cured product of the epoxy resin composition while rotating the cured product about the hollow cylinder axis or solid cylinder axis of the cured product relative to the cutting blade, the step (vi-a) may include changing a distance by which the cutting blade moves closer to the hollow cylinder axis or solid cylinder axis during one rotation of the cured product relative to the cutting blade. More specifically, the step (vi-a) may include changing the control of the positional relationship between the cured product and the cutting blade in such a manner that the distance is increased when the epoxy resin sheet should be made thicker and that the distance is decreased when the epoxy resin sheet should be made thinner.

For the step (vi-a), examples of the factor that determines the thickness of the sheet-shaped formed body of the epoxy resin composition include the composition of the epoxy resin composition, the conditions of application of the epoxy resin composition, and the conditions of heating of the sheet-shaped formed body. That is, in the case where the step (ii) includes heating the sheet-shaped formed body formed by applying the epoxy resin composition onto a substrate, the step (vi-a) may include changing at least one selected from: the contents of the components of the epoxy resin composition; the conditions of the application of the epoxy resin composition onto the substrate; and the conditions of heating of the sheet-shaped formed body.

In order to increase the thickness of the sheet-shaped formed body, for example, the contents of the epoxy resin and the curing agent that are the components of the epoxy resin composition may be increased. Alternatively, for example, the amount of the epoxy resin composition supplied may be increased by increasing the extrusion pressure of an extruder which is a factor in the conditions of application of the epoxy resin composition onto the substrate. Alternatively, for example, the heating temperature, which is a factor in the conditions of heating of the sheet-shaped formed body, may be lowered.

When at least the steps (ii) to (iii) are further carried out after the step (vi-a) is carried out, the porous epoxy resin membrane that has an adjusted membrane thickness can be produced. The steps (i) to (iii) may be further carried out after the step (vi-a), and a sufficient amount of the epoxy resin composition to allow the step (ii) to be carried out several times may be prepared and stored in the step (i). When the steps (ii) to (vi-a) are repeated several times after the step (vi-a) has been carried out once, the membrane thickness of the resulting porous epoxy resin membrane can be made closer to the target membrane thickness.

The target membrane thickness of the porous epoxy resin membrane used as a separator for nonaqueous electrolyte electricity storage devices is preferably set to a given value within the range of 5 $\mu$m to 50 $\mu$m, particularly within the range of 10 $\mu$m to 30 $\mu$m.

The step of adjusting the average pore diameter is carried out, for example, as the step (vi-b) described below after the step (v) of calculating the average pore diameter of the porous epoxy resin membrane based on the infrared absorption characteristics is carried out.

• Step (vi-b)

The step (vi-b) is a step of changing proportions of the components of the epoxy resin composition that are prepared for carrying out the step (i), in such a manner that a proportion of the porogen in the epoxy resin composition to be obtained in the step (i) is reduced when the average pore diameter calculated in the step (v) is greater than a target average pore diameter of the porous epoxy resin membrane, and that the proportion of the porogen in the epoxy resin composition to be obtained in the step (i) is increased when the average pore diameter calculated in the step (v) is smaller than the target average pore diameter of the porous epoxy resin membrane.

By further carrying out at least the steps (i) to (iii) after carrying out the step (vi-b), the porous epoxy resin membrane that has an adjusted average pore diameter can be produced. Also in this case, by carrying out the steps (i) to (vi-b) several times after the step (vi-b) has been carried out once, the membrane thickness of the resulting porous epoxy resin membrane can be made closer to the target membrane thickness. Needless to say, both the step (vi-a) and the step (vi-b) may be carried out after the step (v), and then at least the steps (i) to (iii) may be further carried out. According to this preferred embodiment, both the membrane thickness and the average pore diameter can be made closer to the target values.

The target average pore diameter of the porous epoxy resin membrane used as a separator for nonaqueous electrolyte electricity storage devices is preferably set to a given value within the range of 0.2 $\mu$m to 1 $\mu$m, particularly within the range of 200 nm to 400 nm.

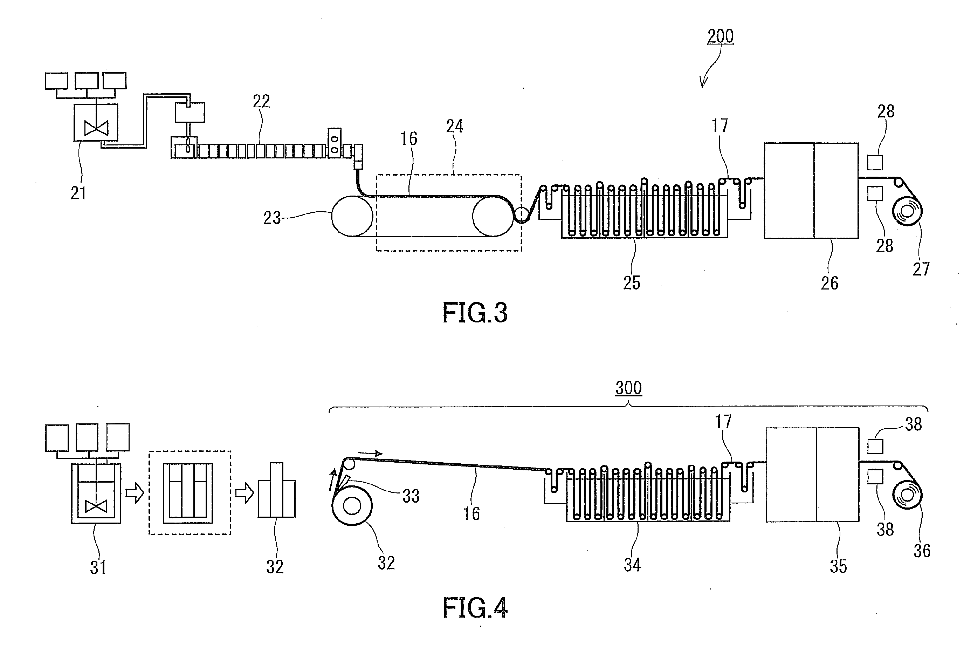

It is suitable to carry out the production method of the present embodiment using a production system 200 or 300 of separators for nonaqueous electrolyte electricity storage devices which is shown in FIG. 3 or FIG. 4.

The production system 200 shown in FIG. 3 is a production system suitable for carrying out the method (a) described above. The production system 200 includes: a mixing device 21; an extruder 22; a base transporting device 23 and a heating device 24 serving as devices for curing a sheet-shaped formed body of an epoxy resin composition containing an epoxy resin, a curing agent, and a porogen; a washing tank 25 serving as a device for removing the porogen from an epoxy resin sheet and holding a halogen-free solvent for removing the porogen; a dryer 26; and a winding device 27. The devices are connected in the order in which they are mentioned. The epoxy resin composition mixed in the mixing device 21 is extruded in the shape of a sheet onto a base by the extruder 22, and thus formed into a sheet-shaped formed body. The base is an endless belt rotatably supported by the base transporting device 23 having a pair of drive rolls. The sheet-shaped formed body is transported into the heating device 24 by the base, and is heated and cured in the heating device 24, so that an epoxy resin sheet (cross-linked epoxy resin product) 16 is produced. The epoxy resin sheet 16 is transported to the washing tank 25. The washing tank 25 is filled with a halogen-free solvent for removing the porogen. The epoxy resin sheet 16 passes through the washing tank 25, so that the porogen is removed. The epoxy resin sheet (porous membrane) 17 resulting from the removal of the porogen is dried in the dryer 26, and is wound into a roll by the winding device 27.

The production system 200 includes an infrared absorption characteristic measuring device (an infrared spectrometer, simply referred to as a "sensor" hereinafter) 28 in addition to the devices 21 to 27 described above. The sensor 28 is disposed between the dryer 26 and the winding device 27. The sensor 28 irradiates the porous epoxy resin membrane with infrared ray, and detects infrared ray transmitted through the porous epoxy resin membrane. Based on the detection result, an infrared absorption spectrum is created.

The membrane thickness and/or the average pore diameter can be calculated by measuring at least one or preferably two absorbances in the infrared absorption spectrum measured by the sensor 28.

In the production system 200 shown in FIG. 3, the sensor 28 is disposed between the dryer 26 and the winding device 27. However, the position of the sensor 28 is not particularly limited as long as the sensor 28 is disposed at a stage subsequent to the drying step performed by the dryer 26. For example, the sensor 28 may be disposed in a feeding section for feeding the porous epoxy resin membrane wound by the winding device 27 to a slitter that slits the porous epoxy resin membrane into a predetermined size.

The production system 300 shown in FIG. 4 is a production system suitable for carrying out the method (c) described above. The production system 300 includes: a cutting device 33 serving as a device for forming a cured product of an epoxy resin composition containing an epoxy resin, a curing agent, and a porogen into a sheet shape; a washing tank 34 serving as a device for removing the porogen from the epoxy resin sheet and holding a halogen-free solvent for removing the porogen; a dryer 35; and a winding device 36. The devices are connected in the order in which they are mentioned. A hollow-cylindrical or solid-cylindrical cured product 32 of an epoxy resin composition, which is obtained in a mixing device 31 provided separately from the production system 300, is set in the cutting device 33 having a cutting blade and a rotating device. The cutting device 33 cuts the surface part of the cured product 32 while rotating the cured product 32 with the rotating device about the hollow cylinder axis or solid cylinder axis of the cured product 32 relative to the cutting blade. Thus, the surface part of the hollow-cylindrical or solid-cylindrical cured product 32 is cut at a predetermined thickness, and a long epoxy resin sheet 16 is continuously formed. The epoxy resin sheet 16 is transported to the washing tank 34. The washing tank 34 is filled with a halogen-free solvent for removing the porogen. The epoxy resin sheet 16 passes through the washing tank 34, so that the porogen is removed. The porous epoxy resin membrane 17 resulting from the removal of the porogen is dried in the dryer 35, and is wound into a roll by the winding device 36. An embodiment different from the production system 300 can be employed in which the cutting device is not connected to the washing tank, the epoxy resin sheet 16 obtained as a result of cutting by the cutting device is wound into a sheet roll by the winding device, and then the sheet roll is wound off to transport the epoxy resin sheet to the washing tank.

Also in the production system 300, a sensor 38 is disposed between the dryer 35 and the winding device 36. Similar to the case of the production system 200 previously described, the membrane thickness and the average pore diameter can be calculated by the sensor 38, and a porous epoxy resin membrane having stable quality can be produced. In addition, for example, a long porous epoxy resin membrane can be stably produced by feeding back the calculation result of the membrane thickness to the cutting device 33 and controlling the membrane thickness within a certain range.

Although the system of the present embodiment is capable of measuring the membrane thickness and the average pore diameter simultaneously, there is no problem in using the system for measurement of the membrane thickness alone or the average pore diameter alone.

Hereinafter, an embodiment of using the separator for nonaqueous electrolyte electricity storage devices that is obtained by the present invention will be described. As shown in FIG. 1, a nonaqueous electrolyte electricity storage device 100 according to the present embodiment includes a cathode 2, an anode 3, a separator 4, and a casing 5. The separator 4 is disposed between the cathode 2 and the anode 3. The cathode 2, the anode 3, and the separator 4 are wound together, and constitute an electrode group 10 serving as an electricity generating element. The electrode group 10 is contained in the casing 5 having a bottom. The electricity storage device 100 is typically a lithium-ion secondary battery.

In the present embodiment, the casing 5 has a hollow-cylindrical shape. That is, the electricity storage device 100 has a hollow-cylindrical shape. However, the shape of the electricity storage device 100 is not particularly limited. For example, the electricity storage device 100 may have a flat, rectangular shape. In addition, the electrode group 10 need not have a wound structure. A plate-shaped electrode group may be formed simply by stacking the cathode 2, the separator 4, and the anode 3. The casing 5 is made of a metal such as stainless steel or aluminum. Furthermore, the electrode group 10 may be contained in a casing made of a material having flexibility. The material having flexibility is composed of, for example, an aluminum foil and resin films attached to both surfaces of the aluminum foil.

The electricity storage device 100 further includes a cathode lead 2a, an anode lead 3a, a cover 6, a packing 9, and two insulating plates 8. The cover 6 is fixed at an opening of the casing 5 via the packing 9. The two insulating plates 8 are disposed above and below the electrode group 10, respectively. The cathode lead 2a has one end connected electrically to the cathode 2 and the other end connected electrically to the cover 6. The anode lead 3a has one end connected electrically to the anode 3 and the other end connected electrically to the bottom of the casing 5. The inside of the electricity storage device 100 is filled with a nonaqueous electrolyte (typically, a nonaqueous electrolyte solution) having ion conductivity. The nonaqueous electrolyte is impregnated into the electrode group 10. This makes it possible for ions (typically, lithium ions) to move between the cathode 2 and the anode 3 through the separator 4.

The cathode 2 can be composed of a cathode active material capable of absorbing and releasing lithium ions, a binder, and a current collector. For example, a cathode active material is mixed with a solution containing a binder to prepare a composite agent, and the composite agent is applied to a cathode current collector and then dried. Thus, the cathode 2 can be fabricated.

As the cathode active material, a commonly-known material used as a cathode active material for a lithium-ion secondary battery can be used. Specifically, a lithium-containing transition metal oxide, a lithium-containing transition metal phosphate, a chalcogen compound, or the like, can be used as the cathode active material. Examples of the lithium-containing transition metal oxide include $LiCoO_2$, $LiMnO_2$, $LiNiO_2$, and substituted compounds thereof in which part of the transition metal is substituted by another metal. Examples of the lithium-containing transition metal phosphate include $LiFePO_4$, and a substituted compound of $LiFePO_4$ in which part of the transition metal (Fe) is substituted by another metal. Examples of the chalcogen compound include titanium disulfide and molybdenum disulfide.

A commonly-known resin can be used as the binder. Examples of resins that can be used as the binder include: fluorine resins such as polyvinylidene fluoride (PVDF), hexafluoropropylene, and polytetrafluoroethylene; hydrocarbon resins such as styrene-butadiene rubber and ethylene-propylene terpolymer; and mixtures thereof. A conductive powder such as carbon black may be contained as a conductive additive in the cathode 2.

A metal material excellent in oxidation resistance, such as aluminum processed into the form of foil or mesh, can be suitably used as the cathode current collector.

The anode 3 can be composed of an anode active material capable of absorbing and releasing lithium ions, a binder, and a current collector. The anode 3 can be fabricated by the same method as that for the cathode 2. The same binder as used for the cathode 2 can be used for the anode 3.

As the anode active material, a commonly-known material used as an anode active material for a lithium-ion secondary battery can be used. Specifically, a carbon-based active material, an alloy-based active material that can form an alloy with lithium, a lithium-titanium composite oxide (e.g., $L_{14}Ti_5O_{12}$), or the like, can be used as the anode active material. Examples of the carbon-based active material include: coke; pitch; baked products of phenolic resins, polyimides, cellulose etc.; artificial graphite; and natural graphite. Examples of the alloy-based active material include aluminum, tin, tin compounds, silicon, and silicon compounds.

A metal material excellent in reduction stability, such as copper or a copper alloy processed into the form of foil or mesh, can be suitably used as the anode current collector. In the case where a high-potential anode active material such as a lithium-titanium composite oxide is used, aluminum processed into the form of foil or mesh can also be used as the anode current collector.

The nonaqueous electrolyte solution typically contains a nonaqueous solvent and an electrolyte. Specifically, an electrolyte solution prepared by dissolving a lithium salt (electrolyte) in a nonaqueous solvent can be suitably used. In addition, a gel electrolyte containing a nonaqueous electrolyte solution, a solid electrolyte prepared by dissolving and decomposing a lithium salt in a polymer such as polyethylene oxide, or the like, can also be used as the nonaqueous electrolyte. Examples of the lithium salt include lithium tetrafluoroborate ($LiBF_4$), lithium hexafluorophosphate ($LiPF_6$), lithium perchlorate ($LiClO_4$), and lithium trifluoromethanesulfonate ($LiCF_3SO_3$). Examples of the nonaqueous solvent include propylene carbonate (PC), ethylene carbonate (EC), methyl ethyl carbonate (MEC), 1,2-dimethoxyethane (DME), γ-butyrolactone (γ-BL), and mixtures thereof.

In the present embodiment, the separator 4 is formed of a porous epoxy resin membrane having a three-dimensional network structure and pores. Adjacent pores may communicate with each other so that ions can move between the front surface and the back surface of the separator 4, i.e., so that ions can move between the cathode 2 and the anode 3. The separator 4 has a thickness in the range of, for example, 5 μm to 50 μm or in the range of, for example, 10 μm to 50 μm. When the separator 4 is too thick, it becomes difficult for ions to move between the cathode 2 and the anode 3. Although it is possible to produce the separator 4 having a thickness smaller than 5 μm, the thickness is preferably 5 μm or more in order to ensure reliability of the electricity storage device 100.

For example, the separator 4 has a porosity in the range of 20% to 80% and an average pore diameter in the range of 0.02 μm to 1 μm or preferably 0.2 μm to 1 μm. When the porosity and average pore diameter are adjusted in such ranges, the separator 4 can fulfill a required function sufficiently.

The porosity can be measured by the following method. First, an object to be measured is cut into predetermined dimensions (e.g., a circle having a diameter of 6 cm), and its volume and weight are determined. The obtained results are substituted into the following expression to calculate the porosity.

$$\text{Porosity (\%)} = 100 \times (V - (W/D))/V$$

V: Volume ($cm^3$)
W: Weight (g)
D: Average density of components ($g/cm^3$)

The average pore diameter can be determined by mercury intrusion method or also by observing a cross-section of the separator 4 with a scanning electron microscope. Specifically, pore diameters are determined through image processing of each of the pores present within a visual-field width of 60 μm and within a predetermined depth from the surface (e.g., 1/5 to 1/100 of the thickness of the separator 4), and the average value of the pore diameters can be determined as the average pore diameter. The image processing can be performed by means of, for example, a free software "Image J" or "Photoshop" manufactured by Adobe Systems Incorporated. In the present description, when the measured value of the average pore diameter varies among different measurement methods, a measured value obtained by mercury intrusion method, more specifically, a mode diameter, is adopted.

The separator 4 may have an air permeability (Gurley value) in the range of 1 second/100 $cm^3$ to 1000 seconds/100 $cm^3$. When the separator 4 has an air permeability within such a range, ions can easily move between the cathode 2 and the anode 3. The air permeability can be measured according to the method specified in Japanese Industrial Standards (JIS) P 8117.

The separator 4 may consist only of the porous epoxy resin membrane, or may be composed of a stack of the porous epoxy resin membrane and another porous material. Examples of the other porous material include porous polyolefin membranes such as porous polyethylene membranes and porous polypropylene membranes, porous cellulose membranes, and porous fluorine resin membranes. The other porous material may be provided on only one surface or both surfaces of the porous epoxy resin membrane.

Also, the separator 4 may be composed of a stack of the porous epoxy resin membrane and a reinforcing member. Examples of the reinforcing member include woven fabrics and non-woven fabrics. The reinforcing member may be provided on only one surface or both surfaces of the porous epoxy resin membrane.

The porous epoxy resin membrane obtained by the present embodiment can be applied to uses other than the use as a separator for nonaqueous electrolyte electricity storage devices. For example, in the case of use in a water treatment membrane, the porous epoxy resin membrane of the present embodiment can be used as a porous support of a composite semipermeable membrane composed of the porous support and a skin layer formed on the support. When the porous epoxy resin membrane according to the present embodiment is used in a composite semipermeable membrane such as a reverse osmosis membrane, the composite semipermeable membrane can have high chemical stability and remain free from deterioration over a long period of time, and a membrane element using the composite semipermeable membrane can have a long life.

Hereinafter, a method for producing a composite semipermeable membrane in which a skin layer is formed on a surface of the porous epoxy resin membrane will be described.

The material forming the skin layer is not particularly limited, and examples thereof include cellulose acetate, ethyl cellulose, polyether, polyester, and polyamide.

In the present invention, a skin layer including a polyamide resin formed by polymerization of a polyfunctional amine component and a polyfunctional acid halide component can be preferably used.

Polyfunctional amine components mean polyfunctional amines having two or more reactive amino groups, and include aromatic, aliphatic, and cycloaliphatic polyfunctional amines. Examples of aromatic polyfunctional amines include m-phenylenediamine, p-phenylenediamine, o-phenylenediamine, 1,3,5-triaminobenzene, 1,2,4-triaminobenzene, 3,5-diaminobenzoic acid, 2,4-diaminotoluene, 2,6-diaminotoluene, N,N'-dimethyl-m-phenylenediamine, 2,4-diaminoanisole, amidol, and xylylenediamine. Examples of aliphatic polyfunctional amines include ethylenediamine, propylenediamine, tris(2-aminoethyl)amine, and n-phenyl-ethylenediamine. Examples of cycloaliphatic polyfunctional amines include 1,3-diaminocyclohexane, 1,2-diaminocyclohexane, 1,4-diaminocyclohexane, piperazine, 2,5-dimethylpiperazine, and 4-aminomethylpiperazine. These polyfunctional amines may be used alone, or two or more thereof may be used in combination. In order to obtain a skin layer having high salt rejection performance, an aromatic polyfunctional amine is preferably used.

Polyfunctional acid halide components mean polyfunctional acid halides having two or more reactive carbonyl groups. Polyfunctional acid halides include aromatic, aliphatic, and cycloaliphatic polyfunctional acid halides. Examples of aromatic polyfunctional acid halides include trimesic acid trichloride, terephthalic acid dichloride, isophthalic acid dichloride, biphenyldicarboxylic acid dichloride, naphthalenedicarboxylic acid dichloride, benzenetrisulfonic acid trichloride, benzenedisulfonic acid dichloride, and chlorosulfonyl benzenedicarboxylic acid dichloride. Examples of aliphatic polyfunctional acid halides include propanedicarboxylic acid dichloride, butanedicarboxylic acid dichloride, pentanedicarboxylic acid dichloride, propanetricarboxylic acid trichloride, butanetricarboxylic acid trichloride, pentanetricarboxylic acid trichloride, glutaryl halide, and adipoyl halide. Examples of cycloaliphatic polyfunctional acid halides include cyclopropanetricarboxylic acid trichloride, cyclobutanetetracarboxylic acid tetrachloride, cyclopentanetricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, and tetrahydrofurandicarboxylic acid dichloride. These polyfunctional acid halides may be used alone or two or more thereof may be used in combination. In order to obtain a skin layer having high salt rejection performance, an aromatic polyfunctional acid halide is preferably used. In addition, a crosslinked structure is preferably formed using a polyfunctional acid halide having three or more functional groups as at least part of the polyfunctional acid halide component.

In order to improve the performance of the skin layer including a polyamide resin, copolymerization with a polymer such as polyvinyl alcohol, polyvinyl pyrrolidone, or polyacrylic acid or with a polyhydric alcohol such as sorbitol or glycerin, may be allowed to take place.

The method for forming a skin layer including a polyamide resin on a surface of the porous epoxy resin membrane is not particularly limited, and any commonly-known method can be used. Examples of the method include an interfacial polymerization method, a phase separation method, and a thin film application method. Specific examples of the interfacial polymerization method include: a method in which an amine aqueous solution containing a polyfunctional amine component and an organic solvent containing a polyfunctional acid halide component are brought into contact with each other and are interfacially polymerized to form a skin layer, and the skin layer is placed on the porous epoxy resin membrane; and a method in which a skin layer made of a polyamide resin is formed directly on the porous epoxy resin membrane by the interfacial polymerization taking place on the porous epoxy resin membrane. The details of the conditions etc. for such interfacial polymerization methods are described in JP S58-24303 A, JP H1-180208 A etc., and the commonly-known techniques can be employed as appropriate.

EXAMPLES

Hereinafter, the present invention will be described in more detail with reference to examples. However, the present invention is not limited to these examples.

A mold release agent (QZ-13 manufactured by Nagase ChemteX Corporation) was applied thinly to the inner side of a hollow-cylindrical stainless steel container having dimensions of 120 mm (inner diameter) x 150 mm, and the container was subjected to drying in a dryer set at 80°C.

An epoxy resin/polypropylene glycol solution was prepared by dissolving 100 parts by weight of a bisphenol A-type epoxy resin (jER 828 manufactured by Mitsubishi Chemical Corporation and having an epoxy equivalent of 184 g/eq. to 194 g/eq.) in 147 parts by weight of polypropylene glycol (SANNIX PP-400 manufactured by Sanyo Chemical Industries, Ltd.). This solution was then added into the stainless steel container. Thereafter, 15 parts by weight of 1,6-diaminohexane (special grade, manufactured by Tokyo Chemical Industry Co., Ltd.) was added into the container.

Using Three-One Motor, the solution was stirred with a stirring blade at 200 rpm for 285 minutes. The temperature of the solution was increased by the stirring, and was 37.2°C immediately after the stirring. Thereafter, the solution was vacuum-defoamed using a vacuum desiccator (VZ-type manufactured by AS ONE Corporation) at a room temperature at about 0.1 MPa until bubbles were fully eliminated. Thereafter, the solution was left at 50°C for about 1 day to cure the resin.

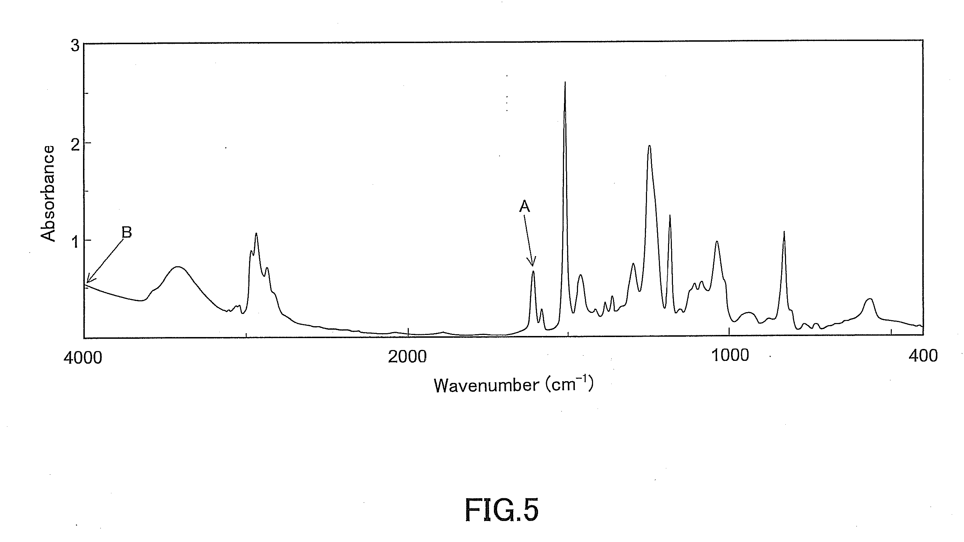

Next, the resulting epoxy resin block was taken out from the stainless steel container, and was continuously sliced at a thickness of 30 μm using a cutting lathe to obtain an epoxy resin sheet. The epoxy resin sheet was washed with a mixed liquid of RO water and DMF (v/v = 1/1) under ultrasonic wave for 10 minutes, then washed with only RO water under ultrasonic wave for 10 minutes, and immersed in RO water for 12 hours to remove the polypropylene glycol. Thereafter, drying at 80°C was performed for 2 hours, and thus a porous epoxy resin membrane was obtained. The infrared absorption spectrum measured in this case is shown in FIG. 5. A membrane thickness of the porous epoxy resin membrane calculated based on the absorbance A at the absorption peak present at 1607 cm$^{-1}$ was 28 $\mu$m. The ratio of the absorbance B at 4000 cm$^{-1}$ to the absorbance A was calculated to be 0.812. The average pore diameter of the porous epoxy resin membrane calculated from this ratio was 332 nm.

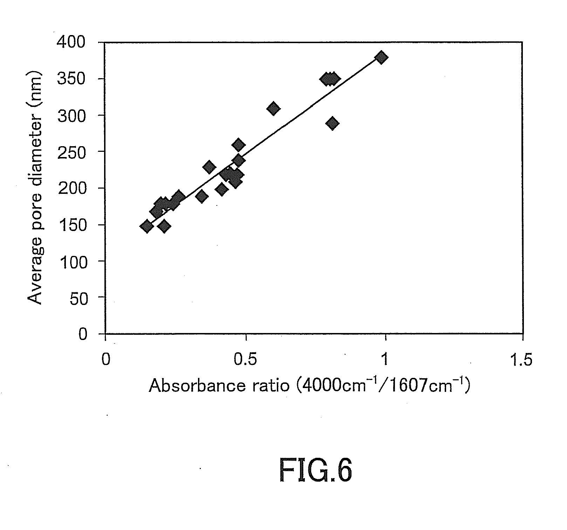

FIG. 6 is a calibration curve created for determination of the average pore diameter. In FIG. 6, the "mode diameter (nm)" calculated by mercury intrusion method is employed for the vertical axis. This calibration curve is one created based on the results of average pore diameter measurement by mercury intrusion method and infrared absorption spectrum measurement performed on porous epoxy resin membranes that were fabricated in the same manner as described above except that the production conditions such as the material mixing ratio were changed as appropriate. Although a calibration curve for the membrane thickness is omitted, such a calibration curve can be created, similar to the above, by measuring membrane thicknesses and infrared absorption spectra of porous epoxy resin membranes for which the production conditions were changed as appropriate.

INDUSTRIAL APPLICABILITY

The porous epoxy resin membrane provided by the present invention can be suitably used as a separator for nonaqueous electrolyte electricity storage devices such as lithium-ion secondary batteries, and can be suitably used in particular for high-capacity secondary batteries required for vehicles, motorcycles, ships, construction machines, industrial machines, and residential electricity storage systems. In addition, the porous epoxy resin membrane provided by the present invention can be used as a porous support of a composite semipermeable membrane composed of the porous support and a skin layer formed on the support.

**Claims**

1. A method for producing a separator for nonaqueous electrolyte electricity storage devices that includes a porous epoxy resin membrane, the method comprising:

   a step (i) of preparing an epoxy resin composition containing an epoxy resin, a curing agent, and a porogen;
   a step (ii) of cutting a cured product of the epoxy resin composition into a sheet shape or curing a sheet-shaped formed body of the epoxy resin composition so as to obtain an epoxy resin sheet;
   a step (iii) of removing the porogen from the epoxy resin sheet using a halogen-free solvent so as to form a porous epoxy resin membrane;
   a step (iv) of irradiating the porous epoxy resin membrane with infrared ray so as to measure infrared absorption characteristics of the porous epoxy resin membrane; and
   a step (v) of calculating a membrane thickness and/or an average pore diameter of the porous epoxy resin membrane based on the infrared absorption characteristics.

2. The method for producing a separator for nonaqueous electrolyte electricity storage devices according to claim 1, wherein
   the step (v) comprises calculating the membrane thickness of the porous epoxy resin membrane,
   the method further comprises a step (vi-a) of changing a factor that determines a thickness at which the cured product is cut or a factor that determines a thickness of the sheet-shaped formed body, in such a manner that a thickness of the epoxy resin sheet to be obtained in the step (ii) is reduced when the membrane thickness calculated in the step (v) is greater than a target membrane thickness of the porous epoxy resin membrane, and that the thickness of the epoxy resin sheet to be obtained in the step (ii) is increased when the membrane thickness calculated in the step (v) is smaller than the target membrane thickness of the porous epoxy resin membrane, and
   the method comprises further carrying out at least the steps (ii) to (iii) after carrying out the step (vi-a) so as to obtain the porous epoxy resin membrane.

3. The method for producing a separator for nonaqueous electrolyte electricity storage devices according to claim 2, wherein
   the step (ii) comprises cutting a surface part of the cured product that has a hollow-cylindrical or solid-cylindrical shape while rotating the cured product about a hollow cylinder axis or a solid cylinder axis of the cured product relative to a cutting blade, and
   the step (vi-a) comprises changing a distance by which the cutting blade moves closer to the hollow cylinder axis or the solid cylinder axis during one rotation of the cured product relative to the cutting blade.

4. The method for producing a separator for nonaqueous electrolyte electricity storage devices according to claim 2, wherein
   the step (ii) comprises heating the sheet-shaped formed body formed by applying the epoxy resin composition onto a substrate, and

the step (vi-a) comprises changing at least one selected from: contents of components of the epoxy resin composition; conditions of the application of the epoxy resin composition onto the substrate; and conditions of the heating of the sheet-shaped formed body.

5. The method for producing a separator for nonaqueous electrolyte electricity storage devices according to claim 2, comprising setting the target membrane thickness of the porous epoxy resin membrane within a range of 5 $\mu$m to 50 $\mu$m.

6. The method for producing a separator for nonaqueous electrolyte electricity storage devices according to claim 1, wherein

the step (v) comprises calculating the average pore diameter of the porous epoxy resin membrane,

the method further comprises a step (vi-b) of changing proportions of components of the epoxy resin composition that are prepared for carrying out the step (i), in such a manner that a proportion of the porogen in the epoxy resin composition to be obtained in the step (i) is reduced when the average pore diameter calculated in the step (v) is greater than a target average pore diameter of the porous epoxy resin membrane, and that the proportion of the porogen in the epoxy resin composition to be obtained in the step (i) is increased when the average pore diameter calculated in the step (v) is smaller than the target average pore diameter of the porous epoxy resin membrane, and

the method comprises further carrying out the steps (i) to (iii) after carrying out the step (vi-b) so as to obtain a porous epoxy resin membrane.

7. The method for producing a separator for nonaqueous electrolyte electricity storage devices according to claim 6, comprising setting the target average pore diameter of the porous epoxy resin membrane within a range of 0.2 $\mu$m to 1 $\mu$m.

8. The method for producing a separator for nonaqueous electrolyte electricity storage devices according to claim 1, wherein the step (v) comprises calculating the membrane thickness of the porous epoxy resin membrane based on an absorbance at an absorption peak present in a wavenumber range of 500 cm$^{-1}$ to 2000 cm$^{-1}$.

9. The method for producing a separator for nonaqueous electrolyte electricity storage devices according to claim 8, wherein the step (v) comprises calculating the membrane thickness of the porous epoxy resin membrane based on an absorbance at an absorption peak present at 1607 cm$^{-1}$.

10. The method for producing a separator for nonaqueous electrolyte electricity storage devices according to claim 1, wherein the step (v) comprises calculating the membrane thickness of the porous epoxy resin membrane based on an absorbance at an absorption peak at which the absorbance is 2 or less.

11. The method for producing a separator for nonaqueous electrolyte electricity storage devices according to claim 1, wherein the step (v) comprises calculating the average pore diameter of the porous epoxy resin membrane based on a ratio of an absorbance B at a specific wavenumber selected from a wavenumber range of 3800 cm$^{-1}$ to 4200 cm$^{-1}$ to an absorbance A at an absorption peak present in a wavenumber range of 500 cm$^{-1}$ to 2000 cm$^{-1}$.

12. The method for producing a separator for nonaqueous electrolyte electricity storage devices according to claim 11, wherein the step (v) comprises calculating the average pore diameter of the porous epoxy resin membrane based on a ratio of the absorbance B at 4000 cm$^{-1}$ to the absorbance A at an absorption peak present at 1607 cm$^{-1}$.

13. A method for producing a porous epoxy resin membrane, the method comprising:

a step (i) of preparing an epoxy resin composition containing an epoxy resin, a curing agent, and a porogen;
a step (ii) of cutting a cured product of the epoxy resin composition into a sheet shape or curing a sheet-shaped formed body of the epoxy resin composition so as to obtain an epoxy resin sheet;
a step (iii) of removing the porogen from the epoxy resin sheet using a halogen-free solvent so as to form a porous epoxy resin membrane;
a step (iv) of irradiating the porous epoxy resin membrane with infrared ray so as to measure infrared absorption characteristics of the porous epoxy resin membrane; and
a step (v) of calculating a membrane thickness and/or an average pore diameter of the porous epoxy resin membrane based on the infrared absorption characteristics.

FIG.1

FIG.2

FIG.3

FIG.4

EP 2 854 198 A1

FIG.5

EP 2 854 198 A1

FIG.6

## INTERNATIONAL SEARCH REPORT

| International application No. |
|---|
| PCT/JP2013/003208 |

A.  CLASSIFICATION OF SUBJECT MATTER
*H01M2/16(2006.01)i, C08J9/26(2006.01)i*

According to International Patent Classification (IPC) or to both national classification and IPC

B.  FIELDS SEARCHED

Minimum documentation searched (classification system followed by classification symbols)
H01M2/16, C08J9/26

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho  1971-2013   Toroku Jitsuyo Shinan Koho   1994-2013

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2010-121122 A (Nitto Denko Corp.), 03 June 2010 (03.06.2010), entire text; all drawings & US 2011/0192788 A1   & WO 2010/047383 A1 & CN 102197073 A       & KR 10-2011-0079735 A | 1-13 |
| A | JP 2010-099654 A (Nitto Denko Corp.), 06 May 2010 (06.05.2010), entire text; all drawings & US 2011/0174723 A1   & EP 2361671 A1 & WO 2010/035807 A1   & CN 102099099 A | 1-13 |
| A | JP 2010-077358 A (Nitto Denko Corp.), 08 April 2010 (08.04.2010), entire text; all drawings (Family: none) | 1-13 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 August, 2013 (02.08.13) | 13 August, 2013 (13.08.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/003208

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2006/064700 A1 (Kaneka Corp.), 22 June 2006 (22.06.2006), claims; examples & JP 4901483 B            & US 2008/0138637 A1 & WO 2006/064700 A1      & KR 10-2007-0086748 A & CN 101080471 A           & TWB 00I386477 | 1-13 |
| A | JP 2000-071309 A (Teijin Ltd.), 07 March 2000 (07.03.2000), paragraphs [0005], [0007] (Family: none) | 1-13 |
| P,A | JP 4940367 B1 (Nitto Denko Corp.), 30 May 2012 (30.05.2012), entire text; all drawings & JP 2013-4210 A         & WO 2012/172619 A & CN 202564458 U         & CN 102832364 A | 1-13 |
| P,A | WO 2012/172788 A1 (Nitto Denko Corp.), 20 December 2012 (20.12.2012), entire text; all drawings & JP 2013-18966 A | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001192487 A
- JP 2000030683 A
- JP S5824303 A
- JP H1180208 A